# FASCICULE DE BREVET EUROPEEN

(11) **EP 1 825 160 B1**
(45) Date de publication et mention de la délivrance du brevet: **23.07.2014**
(21) Numéro de dépôt: 05824417.9
(22) Date de dépôt: 06.12.2005
(51) Int. Cl.: F16D 13/64

(54) **EMBRAYAGE A FRICTION, NOTAMMENT POUR VEHICULE AUTOMOBILE, DU TYPE COMPORTANT UN AMORTISSEUR PERFECTIONNE**
REIBUNGSKUPPLUNG, INSBESONDERE FÜR EIN KRAFTFAHRZEUG MIT VERBESSERTEM STOSSDÄMPFER
FRICTION CLUTCH, IN PARTICULAR FOR MOTOR VEHICLE, OF THE TYPE COMPRISING AN IMPROVED SHOCK ABSORBER

(30) Priorité: 17.12.2004 FR 0453058
(43) Date de publication de la demande: 29.08.2007
(73) Titulaire: VALEO EMBRAYAGES s.a.s., 80009 Amiens Cedex 1 (FR)
(72) Inventeur: LAMANA, Léonardo, F-80000 Amiens (FR); GRESSIER, Bruno, F-80330 Longueau (FR)
(74) Mandataire: Tran, Chi-Hai
(86) Numéro de dépôt international: PCT/FR2005/051045
(87) Numéro de publication internationale: WO 2006/067343

(56) Documents cités:
- EP-A- 0 764 793
- DE-C1- 19 601 742
- US-A- 4 989 713
- US-A- 5 657 845
- PATENT ABSTRACTS OF JAPAN vol. 009, no. 011 (M-351), 18 janvier 1985 (1985-01-18) & JP 59 159431 A (ATSUGI JIDOUSHIYA BUHIN KK), 10 septembre 1984 (1984-09-10)

## Description

La présente invention concerne un embrayage à friction, notamment pour véhicule automobile, du type comportant un amortisseur perfectionné.

Dans un véhicule automobile, un embrayage à friction a pour fonction de transmettre un couple entre un élément rotatif d'entrée et un élément rotatif de sortie, par pincement de la friction entre des plateaux de pression et de réaction liés en rotation avec un volant moteur.

En général, l'élément d'entrée est formé par un disque de friction et l'élément de sortie est lié en rotation, avec ou sans jeu angulaire, à un moyeu lié en rotation avec un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement.

On connaît déjà, dans l'état de la technique, notamment d'après US 4 989 713, un embrayage à friction, notamment pour véhicule automobile, conforme au préambule de la revendication 1.

Un amortisseur comporte généralement un voile intercalé entre deux rondelles de guidage. Ces deux rondelles de guidage sont habituellement liées entre elles en rotation,

On notera que l'amortisseur est dit « symétrique » lorsque le disque de friction (élément d'entrée) est solidaire du voile. Dans ce cas, le premier élément de couplage est formé par le voile et le second élément de couplage est formé par les rondelles de guidage de l'amortisseur,

Par ailleurs, l'amortisseur est dit « asymétrique » lorsque le disque de friction est solidaire de l'une des rondelles de guidage. Dans ce cas, le premier élément de couplage est formé par les rondelles de guidage et le second élément de couplage est formé par le voile de l'amortisseur.

Habituellement, les organes élastiques sont logés dans des fenêtres ménagées dans les premier et second éléments de couplage.

Dans de nombreux cas, le débattement angulaire entre les éléments rotatifs d'entrée et de sortie est limité par les organes élastiques. En effet, lorsque le couple est transmis entre les premier et second éléments de couplage, les organes élastiques sont susceptibles d'être comprimés jusqu'à une limite de compression définissant un angle maximal de débattement angulaire.

Or, l'utilisation des organes élastiques Jusqu'à leur limite de compression réduis leur durée de vie.

L'invention a notamment pour but d'augmenter la durée de vie des organes élastiques en fournissant un embrayage de véhicule automobile comportant des moyens de limitation de débattement angulaire indépendants des organes élastiques.

A cet effet, l'invention a pour objet un embrayage conforme à la revendication 1.

Les butées de limitation angulaire complémentaires sont conformées de manière à définir un angle de limitation de débattement entre les éléments rotatifs d'entrée et de sortie évitant que les organes élastiques atteignent leur limite de compression.

Lorsque l'angle de débattement atteint l'angle de limitation, le couple est alors transmis directement du premier élément de couplage à l'organe de limitation, solitaire en rotation du second élément de couplage, par l'intermédiaire des butées de limitation. Le couple en excès, appelé surcouple, ne passe alors plus par les organes élastiques.

Ainsi, en cours de fonctionnement de l'embrayage, les organes élastiques n'atteignent jamais leur limite de compression, ce qui augmente leur durée de vie.

Il est en effet connu que le couple du moteur peut présenter des sur couples qui ne sont pas filtrés par l'embrayage à friction.

Dans le cas de la présente invention, le surcouple ne passe pas par le second élément de couplage, mais par l'organe de limitation, à la différence des solutions de l'art antérieur connues.

On peut ainsi dimensionner avantageusement le second élément de couplage.

Un embrayage selon l'invention peut en outre comporter l'une ou plusieurs des caractéristiques suivantes :
- l'organe de limitation est de forme générale annulaire ;
- les butées de limitation sont délimitées, d'une part, par des saillies radiales ménagées sur le contour interne du premier élément de couplage et, d'autre part, par des saillies radiales ménagées sur un contour radialement externe de l'organe de limitation ;
- les éléments rotatifs d'entrée et de sortie étant susceptibles de se déplacer angulairement l'un par rapport à l'autre dans des sens direct et rétrograde, le débattement angulaire dans le sens direct est limité par un angle direct prédéterminé par rapport à une position de repos et le débattement angulaire dans le sens rétrograde est limité par un angle rétrograde prédéterminé par rapport à la position de repos ;
- le premier élément de couplage est un voile et le second élément de couplage est une rondelle de guidage ;
- l'embrayage comporte deux rondelles de guidage, couplées entre elles par des doigts axiaux s'étendant à travers des orifices ménagés dans l'organe de limitation pour coupler l'organe de limitation avec les rondelles de guidage ;
- les orifices de l'organe de limitation coïncident angulairement avec les saillies radiales de cet organe de limitation ;
- les doigts axiaux sont des rivets ;
- le premier élément de couplage est une rondelle de guidage et le second élément de couplage est un voile ;
- le voile et l'organe de limitation sont conformés en une seule pièce ;
- des saillies radiales sont ménagées, d'une part, sur un contour interne du voile et, d'autre part, sur un contour radialement externe de l'organe de limitation, de façon que ces saillies radiales coopèrent entre elles sans jeu ;
- l'élément rotatif d'entrée est un disque de friction de l'embrayage ; et
- l'organe de limitation est lié en rotation, avec ou sans jeu angulaire, à un moyeu lié en rotation avec un arbre d'entrée d'une boite de vitesses du véhicule automobile.

L'invention sera mieux comprise à la lecture de la description qui va suivre, donnée uniquement à titre d'exemple et faite en se référant aux dessins annexés dans lesquels :
- la figure 1 est une vue en perspective éclatée d'un embrayage selon un premier mode de réalisation de l'invention ;
- la figure 2 est une vue de face d'un voile de l'embrayage de la figure 1 et de l'organe de limitation associé ;
- la figure 3 est une demi-vue en coupe axiale d'un embrayage selon un deuxième mode de réalisation de l'invention ;
- la figure 4 est une demi-vue en coupe axiale d'un embrayage selon un troisième mode de réalisation de l'invention.

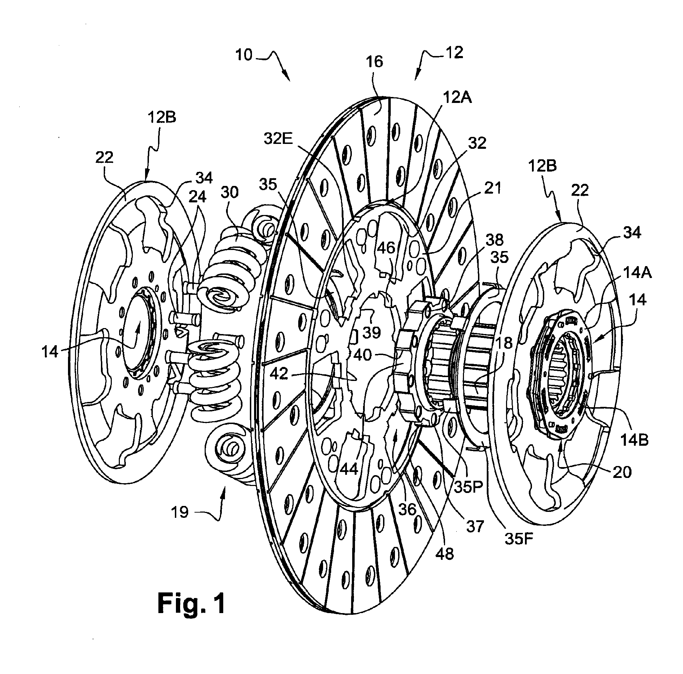

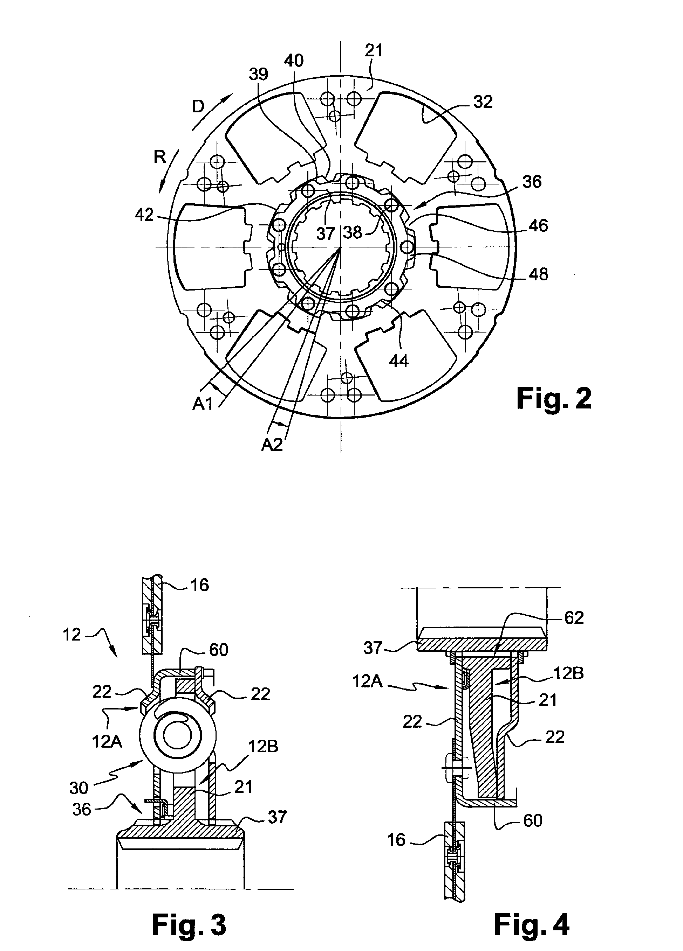

On a représenté sur les figures 1 et 2 un embrayage à friction, notamment pour véhicule automobile, selon un premier mode de réalisation de l'invention.

L'embrayage à friction comprend un dispositif à friction 10 destiné à transmettre un couple entre un volant moteur solidaire en rotation d'un arbre menant, tel que le vilebrequin d'un moteur du véhicule automobile, et un arbre mené, tel que l'arbre d'entrée d'une boîte de vitesses du véhicule automobile.

Le dispositif à friction 10 est muni d'un amortisseur principal 12 et d'un pré-amortisseur 14. L'amortisseur principal 12 est couplé en série avec le pré-amortisseur 14 entre un élément rotatif d'entrée générale 16 et un élément rotatif de sortie générale 18.

L'élément rotatif d'entrée générale 16 est un disque de friction susceptible d'être lié en rotation avec le volant moteur par pincement entre des plateaux de pression et de réaction liés en rotation avec le volant moteur et actionnés par des moyens embrayeurs.

L'élément rotatif de sortie générale est un moyeu 18, de forme générale annulaire, lié en rotation avec l'arbre d'entrée de la boîte de vitesse du véhicule automobile. A cet effet, le moyeu 18 est muni de cannelures longitudinales internes permettant de le solidariser en rotation avec une extrémité de l'arbre d'entrée de la boîte de vitesse.

L'amortisseur principal 12 et le pré-amortisseur 14 sont munis chacun d'éléments rotatifs d'entrée et de sortie, sensiblement coaxiaux. On notera que l'élément d'entrée du pré-amortisseur 14 est habituellement formé par l'élément de sortie de l'amortisseur principal 12.

L'amortisseur principal 12 comporte des premier 12A et second 12B éléments de couplage de formes générales de révolution, respectivement liés en rotation aux éléments rotatifs d'entrée et de sortie de l'amortisseur 12. Les premier 12A et second 12B éléments de couplage sont couplés entre eux à l'aide de moyens d'amortissements 19.

De même, le pré-amortisseur 14 comporte des premier 14A et second 14B éléments de couplage de formes générales de révolution, respectivement liés en rotation aux éléments rotatifs d'entrée et de sortie de ce pré-amortisseur 14. Les premier 14A et second 14B éléments de couplage sont couplés entre eux à l'aide de moyens d'amortissements 20.

De manière classique, l'élément rotatif de sortie de l'amortisseur principal 12 est formé par le second élément de couplage 12B. Le premier élément de couplage 14A du pré-amortisseur 14 est fixé, par exemple par rivetage, à ce second élément de couplage 12B de l'amortisseur principal.

Selon le mode de réalisation décrit en référence à la figure 1, l'élément d'entrée de l'amortisseur principal 12 est l'élément d'entrée générale du dispositif à friction 10, c'est-à-dire le disque de friction 16. L'élément de sortie du pré-amortisseur 14 est l'élément de sortie générale du dispositif à friction 10, c'est à dire le moyeu 18.

Ainsi, lorsqu'un couple est transmis du disque de friction 16 au moyeu 18, il passe tout d'abord du premier 12A au second 12B élément de couplage de l'amortisseur principal 12 par l'intermédiaire des moyens d'amortissement 19.

Selon le premier mode de réalisation de l'invention, l'amortisseur principal 12 est du type symétrique. Dans ce cas, le premier élément de couplage 12A est un voile 21 (solidaire du disque de friction 16) de l'amortisseur principal 12, et le second élément de couplage 12B est formé par deux rondelles de guidage 22 de l'amortisseur principal 12 entre lesquelles est logé le voile 21, coaxialement à celles-ci.

Les rondelles de guidage 22 sont couplées entre elles par des doigts axiaux 24, de préférence des rivets.

Le premier élément de couplage 14A du pré-amortisseur 14 est généralement formé par deux rondelles de guidage, fixées à l'une des rondelles de guidage 22 correspondante de l'amortisseur principal, par exemple par rivetage.

Les rondelles de guidage 14A du pré-amortisseur 14 entourent un voile formant le second élément de couplage 14B du pré-amortisseur 14. Ce voile 14B est lié en rotation au moyeu 18 à l'aide de cannelures internes coopérant avec des cannelures externes du moyeu 18.

Les moyens d'amortissement 19 de l'amortisseur principal 12 comprennent des organes élastiques 30 à effet circonférentiel, tels que des ressorts hélicoïdaux de forte raideur.

Les organes élastiques 30 sont logés dans des fenêtres 32 du voile 21 et dans des fenêtres 34 des rondelles de guidage 22. Ces organes élastiques 30 participent à la transmission du couple de rotation entre le voile 21 et les rondelles de guidage 22.

Les moyens d'amortissement 19 comportent en outre deux rondelles de frottement 35, chacune agencée entre le voile 21 et une rondelle de guidage 22 correspondante. Les rondelles de frottement 35 sont liées en rotation avec le voile 21 à l'aide de pattes 35P pliées coopérant avec des encoches 32E ménagées dans des contours des fenêtres 32 du voile 21. Chaque rondelle de frottement 35 comporte en outre une face de frottement 35F coopérant avec la rondelle de guidage 22 correspondante. Ainsi, lorsque le voile 21 et les rondelles de guidage 22 se déplacent angulairement l'un par rapport à l'autre, un frottement est généré entre les rondelles de frottement 35 et les rondelles de guidage 22.

On peut également disposer une rondelle dépourvue de patte à la place de la rondelle de frottement à patte 35. On ménage alors des dentures, dont la forme est conjuguée avec celle de l'organe de limitation 37, sur un contour radialement interne de ladite rondelle.

Afin d'augmenter la durée de vie des organes élastiques 30, l'amortisseur principal 12 comporte des moyens 36 de limitation de débattement angulaire entre le disque de friction 16 et les rondelles de guidage 22 indépendants des organes élastiques 30.

Les moyens de limitation 36 comportent un organe de limitation 37 de forme générale annulaire, lié en rotation avec les rondelles de guidage 22.

A cet effet, les rivets 24 couplant ensemble les rondelles de guidage 22 de l'amortisseur principal s'étendent à travers des orifices 38 ménagés dans l'organe de limitation 37.

On notera que cet organe de limitation 37 est lié en rotation avec le moyeu 18, avec un jeu angulaire autorisant un débattement angulaire entre les rondelles de guidage 22 et ce moyeu 18 par l'intermédiaire du pré-amortisseur 14.

Les moyens de limitation 36 comprennent en outre des butées 39, 40 de limitation angulaire complémentaires ménagées, d'une part, sur un contour 42 radialement interne du voile 21 et, d'autre part, sur un contour 44 radialement externe de l'organe de limitation 37 (voir notamment la figure 2).

Les butées de limitation 39, 40 sont délimitées, d'une part, par des saillies radiales 46 ménagées sur le contour interne 42 du voile 21 et, d'autre part, par des saillies radiales 48 ménagées sur le contour externe 44 de l'organe de limitation 37.

De préférence, les orifices 38 de l'organe de limitation 37 coïncident angulairement avec les saillies radiales 48, afin de réduire l'encombrement radial de l'organe de limitation 37. En effet, cet agencement permet de réduire la dimension radiale de l'organe de limitation 37 entre les saillies 48.

En général, le voile 21 et l'organe de limitation 37 sont susceptibles de se déplacer angulairement l'un par rapport l'autre dans des sens directs D et rétrogrades R, représentés sur la figure 2. Le débattement angulaire dans le sens direct D est limité par un angle direct prédéterminé A1 par rapport à une position de repos représentée sur la figure 2 et le débattement angulaire dans le sens rétrograde R est limité par un angle rétrograde prédéterminé A2 par rapport à la position de repos représentée sur la figure 2. De préférence, l'angle direct prédéterminé A1 est supérieur à l'angle rétrograde prédéterminé A2.

Sur les figures 3 et 4, les éléments analogues à ceux des figures 1 et 2 sont désignés par des références identiques.

Selon le second mode de réalisation, décrit en référence à la figure 3, l'amortisseur principal 12 est du type asymétrique, c'est-à-dire que le disque de friction 16 est fixé sur l'une des rondelles de guidage 22.

Les rondelles de guidage 22 sont couplées entre elles à l'aide de pattes 60 ménagées sur la rondelle de guidage 22 portant le disque de friction 16. Ces pattes 60 sont repliées vers l'autre rondelle de guidage 22 et coopèrent avec des encoches correspondantes ménagées sur cette autre rondelle de guidage 22.

Les moyens de limitation 36 comprennent des butées de limitation angulaire complémentaires ménagées, d'une part, sur des contours radialement interne des rondelles de guidage 22 et, d'autre part, sur un contour radialement externe de l'organe de limitation 37.

On notera que l'organe de limitation 37 et le voile 21 sont conformés en une seule pièce.

Selon le troisième mode de réalisation, décrit en référence à la figure 4, des saillies radiales 62 sont ménagées, d'une part, sur un contour interne du voile 21 et, d'autre part, sur un contour radialement externe de l'organe de limitation 62, de façon que ses saillies radiales 62 coopèrent entre elles sans jeu. L'organe de limitation 37 est ainsi solidaire en rotation du voile 21.

On notera que l'invention n'est pas limitée aux modes de réalisations précédemment décrits. En effet, on pourrait envisager d'autres modes de réalisation sans sortir de la portée des revendications.

En particulier, l'invention peut s'appliquer à un dispositif de friction comportant un amortisseur principal symétrique et ne comportant pas de pré-amortisseur. Dans ce cas, l'organe de limitation 37 est lié en rotation sans jeu angulaire avec le moyeu 18.

## Revendications

1. Embrayage à friction (10), notamment pour véhicule automobile, du type comportant un amortisseur (12) susceptible de passer le couple moteur maximum comprenant:
- des éléments rotatifs d'entrée (16) et de sortie (22 ; 37) sensiblement coaxiaux,
- un premier élément de couplage (12A), de forme générale de révolution, solidaire en rotation de l'élément rotatif d'entrée (16),
- un second élément de couplage (12B), de forme générale de révolution, solidaire en rotation de l'élément rotatif de sortie (22 ; 37),
- des moyens d'amortissement (19) comprenant des organes élastiques (30) à effet circonférentiel portés par les premier (12A) et second (12B) éléments de couplage, et
- des moyens (36) de limitation de débattement angulaire entre les éléments rotatifs d'entrée (16) et de sortie (22 ; 37), comprenant des butées de limitation angulaire (39) ménagées sur un contour (42) radialement interne du premier élément de couplage (12A)
**caractérisé en ce que** les moyens de limitation (36) comprennent des butées (40) de limitation angulaire ménagées sur un organe de limitation (37) solidaire en rotation du second élément de couplage (12B), ces butées de limitation (40) de l'organe de limitation (37) étant complémentaires des butées de limitation (39) du contour interne (42) du premier élément de couplage (12A), le premier élément de couplage (12A) étant un voile (21) et le second élément de couplage (12B) formant deux rondelles de guidage (22), les deux rondelles de guidage (22) étant couplées entre elles par des doigts axiaux (24) s'étendant à travers des orifices (38) ménagés dans l'organe de limitation (37) pour coupler l'organe de limitation (37) avec les rondelles de guidage (22).

2. Embrayage (10) selon la revendication 1, **caractérisé en ce que** l'organe de limitation (37) est de forme générale annulaire.

3. Embrayage (10) selon la revendication 2, **caractérisé en ce que** les butées de limitation (39, 40) sont délimitées, d'une part, par des saillies radiales (46) ménagées sur le contour interne (42) du premier élément de couplage (12A) et, d'autre part, par des saillies radiales (48) ménagées sur un contour (44) radialement externe de l'organe de limitation (37).

4. Embrayage (10) selon l'une quelconque des revendications précédentes, **caractérisé en ce que**, les éléments rotatifs d'entrée (16) et de sortie (22 ; 37) étant susceptibles de se déplacer angulairement l'un par rapport à l'autre dans des sens direct (D) et rétrograde (R), le débattement angulaire dans le sens direct (D) est limité par un angle direct (A1) prédéterminé par rapport à une position de repos et le débattement angulaire dans le sens rétrograde (R) est limité par un angle rétrograde (A2) prédéterminé par rapport à la position de repos.

5. Embrayage (10) selon les revendications 1 et 3 prises ensemble, **caractérisé en ce que** les orifices (38) de l'organe de limitation (37) coïncident angulairement avec les saillies radiales (48) de cet organe de limitation (37).

6. Embrayage (10) selon la revendication 1 ou 5, **caractérisé en ce que** les doigts axiaux (24) sont des rivets.

7. Embrayage (10) selon l'une quelconque des revendications précédentes, **caractérisé en ce que** l'élément rotatif d'entrée (16) est un disque de friction de l'embrayage.

8. Embrayage (10) selon l'une quelconque des revendications précédentes, **caractérisé en ce que** l'organe de limitation (37) est lié en rotation, avec ou sans jeu angulaire, à un moyeu (18) lié en rotation avec un arbre d'entrée d'une boite de vitesses du véhicule automobile.

## Patentansprüche

1. Reibungskupplung (10), insbesondere für ein Kraftfahrzeug, mit einem Dämpfer, der dazu geeignet ist, das maximale Antriebsmoment zu passieren, umfassend:
- im Wesentlichen koaxiale drehbare Eingangs- (16) und Ausgangselemente (22; 37),
- ein erstes Koppelelement (12A) mit umlaufender Grundform, das rotatorisch mit dem drehbaren Eingangselement (16) verbunden ist,
- ein zweites Koppelelement (12B) mit umlaufender Grundform, das rotatorisch mit dem drehbaren Ausgangselement (22, 37) verbunden ist,
- Dämpfungsmittel (19), umfassend in Umfangsrichtung wirksame elastische Organe (30), die von dem ersten (12A) und zweiten (12B) Koppelelement getragen sind, und
- Mittel (36) zur Begrenzung der winkelmäßigen Verlagerung zwischen den drehbaren Eingangs- (16) und Ausgangselementen (22; 37), umfassend Anschläge (39) zur winkelmäßigen Begrenzung, die auf einer radial inneren Kontur (42) des ersten Koppelelements (12A) vorgesehen sind,
**dadurch gekennzeichnet, dass** die Begrenzungsmittel (36) Anschläge (40) zur winkelmäßigen Begrenzung umfassen, die auf einem Begrenzungsorgan (37) vorgesehen sind, welches rotatorisch mit dem zweiten Koppelelement (12B) verbunden ist, wobei diese Begrenzungsanschläge (40) des Begrenzungsorgans (37) komplementär zu den Begrenzungsanschlägen (39) der inneren Kontur (42) des ersten Koppelelements (12A) sind, wobei das erste Koppelelement (12A) ein Flansch (21) ist und das zweite Koppelelement (12B) zwei Führungsscheiben (22) bildet, wobei die beiden Führungsscheiben (22) untereinander durch axiale Stifte (24) gekoppelt sind, welche sich quer durch in das Begrenzungsorgan (37) eingebrachte Öffnungen (38) erstrecken, um das Begrenzungsorgan (37) mit den Führungsscheiben (22) zu koppeln.

2. Kupplung (10) nach Anspruch 1, **dadurch gekennzeichnet, dass** das Begrenzungsorgan (37) von ringförmiger Grundform ist.

3. Kupplung (10) nach Anspruch 2, **dadurch gekennzeichnet, dass** die Begrenzungsanschläge (39, 40) einerseits durch radiale Vorsprünge (46), die auf der inneren Kontur (42) des ersten Koppelelements (12A) vorgesehen sind, und andererseits durch radiale Vorsprünge (48), die auf einer radial äußeren Kontur (44) des Begrenzungsorgans (37) vorgesehen sind, umgrenzt sind.

4. Kupplung (10) nach einem der vorhergehenden Ansprüche, **dadurch gekennzeichnet, dass** die drehbaren Eingangs- (16) und Ausgangselemente (22; 37) dazu geeignet sind, sich relativ zueinander winkelmäßig in einer vorwärts gerichteten (D) und einer rückwärts gerichteten (R) Drehrichtung zu verlagern, wobei die winkelmäßige Verlagerung in der vorwärts gerichteten Drehrichtung (D) gegenüber einer Ruheposition durch einen vorbestimmten vorwärts gerichteten Winkel (A1) und die winkelmäßige Verlagerung in der rückwärts gerichteten Drehrichtung (R) gegenüber der Ruheposition durch einen vorbestimmten rückwärts gerichteten Winkel (A2) begrenzt ist.

5. Kupplung (10) nach den Ansprüchen 1 und 3 in Kombination, **dadurch gekennzeichnet, dass** die Öffnungen (38) des Begrenzungsorgans (37) winkelmäßig mit den radialen Vorsprüngen (48) von diesem Begrenzungsorgan (37) zusammenfallen.

6. Kupplung (10) nach Anspruch 1 oder 5, **dadurch gekennzeichnet, dass** die axiale Stifte (24) Niete sind.

7. Kupplung (10) nach einem der vorherigen Ansprüche, **dadurch gekennzeichnet, dass** das drehbare Eingangselement (16) eine Reibungsscheibe der Kupplung ist.

8. Kupplung (10) nach einem der vorherigen Ansprüche, **dadurch gekennzeichnet, dass** das Begrenzungsorgan (37) mit oder ohne winkelmäßigem Spiel rotatorisch mit einer Nabe (18) verbunden ist, die rotatorisch mit einer Eingangswelle eines Getriebes des Kraftfahrzeugs verbunden ist.

## Claims

1. Friction clutch (10), in particular for a motor vehicle, of the type comprising a damper (12) which can transmit¹ the maximum engine torque, comprising:
- substantially coaxial rotary input (16) and output (22; 37) elements;
- a first coupling element (12A), with a form generally of revolution, which is integral in rotation with the rotary input element (16);
- a second coupling element (12B), with a form generally ofrevolution, which is integral in rotation with the rotary output element (22; 37);
- damping means (19) comprising resilient units (30) with a circumferential effect which are supported by the first (12A) and second (12B) coupling elements; and
- means (36) for limitation of angular clearance between the rotary input (16) and output (22; 37) elements, comprising angular limitation stops (39) which are provided on a radially inner contour (42) of the first coupling element (12A), **characterised in that** the means (36) for limitation comprise angular limitation stops (40) provided on a limitation unit (37) which is integral in rotation with the second coupling element (12B), these stops (40) for limitation of the limitation unit (37) being complementary with the limitation stops (39) of the inner contour (42) of the first coupling element (12A), the first coupling element (12A) being a flange (21), and the second coupling element (12B) forming two guide washers (22), the two guide washers (22) being coupled to one another by axial fingers (24) which extend through orifices (38) provided in the limitation unit (37), in order to couple the limitation unit (37) with the guide washers (22).
¹ Translator's note: The French term used at this point is "passer" meaning literally "pass", which does not seem appropriate in relation to torque. I have therefore used the word "transmit", since paragraph 2 of the description says that the function of a friction clutch is to "transmettre" = "transmit" torque.

2. Clutch (10) according to claim 1, **characterised in that** the limitation unit (37) has a generally annular form.

3. Clutch (10) according to claim 2, **characterised in that** the limitation stops (39, 40) are delimited firstly by radial projections (46) provided on the inner contour (42) of the first coupling element (12A), and secondly by radial projections (48) provided on a radially outer contour (44) of the limitation unit (37).

4. Clutch (10) according to any one of the preceding claims, **characterised in that**, since the rotary input (16) and output (22; 37) elements are liable to be displaced angularly relative to one another in the direct (D) and retrograde (R) directions, the angular clearance in the direct (D) direction is limited by a direct angle (A1) which is predetermined relative to a position of rest, and the angular clearance in the retrograde (R) direction is limited by a retrograde angle (A2) which is predetermined relative to the position of rest.

5. Clutch (10) according to claims 1 and 3 taken together, **characterised in that** the orifices (38) in the limitation unit (37) coincide angularly with the radial projections (48) of this limitation unit (37).

6. Clutch (10) according to claim 1 or 5, **characterised in that** the axial fingers (24) are rivets.

7. Clutch (10) according to any one of the preceding claims, **characterised in that** the rotary input element (16) is a friction disc of the clutch.

8. Clutch (10) according to any one of the preceding claims, **characterised in that** the limitation unit (37) is connected in rotation, with or without annular play, to a hub (18) which is connected in rotation to an input shaft of a gear box of the motor vehicle.
